# EUROPEAN PATENT SPECIFICATION

(11) **EP 2 075 545 B1**
(45) Date of publication and mention of the grant of the patent: **09.11.2011**
(21) Application number: 08022465.2
(22) Date of filing: 24.12.2008
(51) Int. Cl.: G01C 21/36

(54) **Navigation apparatus and method of providing information on points of interest**
Navigationsgerät und Navigationsverfahren zur Bereitstellung von Informationen von Orten von Interesse
Appareil de navigation et procédé pour fournir des informations concernant des points d'intérêt

(30) Priority: 27.12.2007 KR 20070139275
(43) Date of publication of application: 01.07.2009
(73) Proprietor: LG Electronics Inc., Seoul 150-721 (KR)
(72) Inventor: Kim, Hyun-Seok, Suwon-shi Gyeonggido, 443-738 (KR); Lee, Kun-Sik, Seoul 139-200 (KR); Park, Jun-Ho, Seoul 137-724 (KR); Lee, Yu-Ri, Guro-gu Seoul, 152-055 (KR); Shim, Jae-Hee, Dongjak-ku Seoul, 156-855 (KR)
(74) Representative: TER MEER - STEINMEISTER & PARTNER GbR

(56) References cited:
- EP-A2- 1 046 882
- WO-A1-2006/020088
- US-A1- 2004 243 307

## Description

### CROSS REFERENCE TO A RELATED APPLICATION

The present application claims priority to Korean patent application No. 10-2007-0139275, filed in Korea on December 27, 2007, the entire contents of which are hereby incorporated by reference.

### BACKGROUND OF THE INVENTION

### 1. Field of the Invention

The present invention relates to a navigation apparatus and corresponding method for providing users with information on points of interest and setting and re-setting a path to selected points of interest.

### 2. Description of the Related Art

Navigation apparatuses are now used in many vehicles for providing directions to users. The navigation apparatuses generally display a current position of the vehicle and a route on how to get to a desired destination. Further, some recent navigation apparatuses include a function for indicating locations of and directions to a point of interest (POI) such as store on a map.

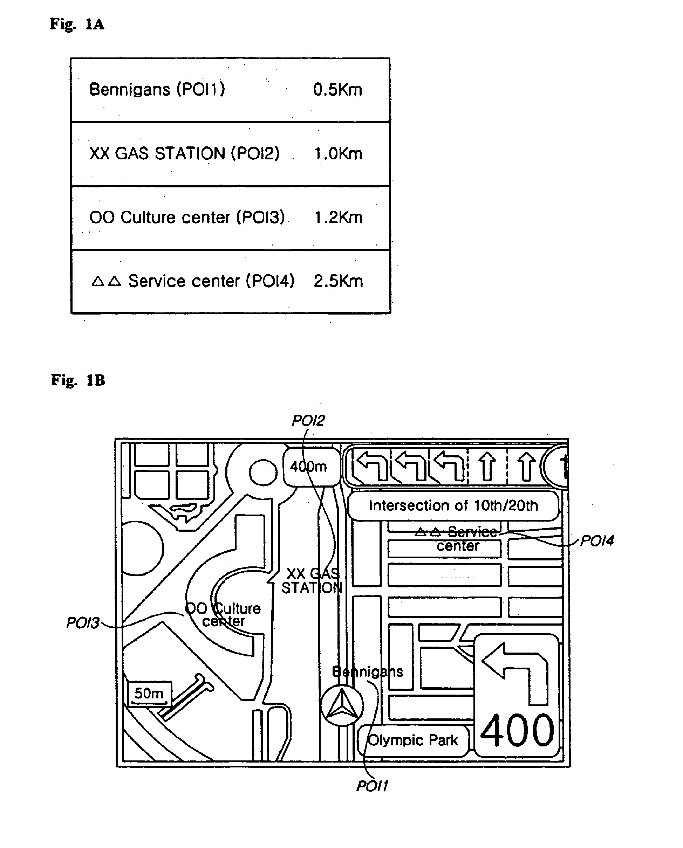

In more detail, the related art navigation apparatus displays a list of POIs or displays POIs on a general map. For example, FIG. 1A is an overview of a related art navigation display screen illustrating a list of POIs. FIG. 1B is similar to FIG. 1A, but includes the list of POIs being displayed on a general map. However, in the related art navigation apparatus, the user must first enter a separate menu to request the list of POIs. Further, as shown in FIG. 1A, the navigation apparatus also displays the distances to the particular POIs from the current position of the vehicle. However, it is difficult for the user to see directions on how to get to a particular POI from the list of POIs displayed in FIG. 1A.

In addition, in FIG. 1B, the names of respective POIs are displayed at corresponding positions on a map. However, in FIG. 1B, it is difficult to determine or estimate distances between different POIs and the current position of the navigation apparatus.

### SUMMARY OF THE INVENTION

Accordingly, one object of the present invention is to address the above-noted and other drawbacks of the related art.

Another object of the present invention is to provide a navigation apparatus and corresponding method of displaying POIs on a map with equidistant curves, so that users can easily recognize distances to the different POIs displayed on the map.

Yet another object of the present invention is to provide a navigation apparatus and corresponding method of providing a POI category menu by which users can easily select a POI category to view different POIs included in the selected POI category.

Still another object of the present invention is to provide a navigation apparatus and corresponding method for allowing users to easily search detailed information of a selected POI.

Another object of the present invention is to provide a navigation apparatus and corresponding method for allowing users to easily set a path to or through a particular POI. Objects of the present invention are achieved by subject matters of the independent claims.

The present invention provides in one aspect an apparatus of providing map information including a GPS receiving module configured to receive a GPS (Global Positioning System) signal and to compute a position of the apparatus, a controller configured to control the GPS receiving module, to receive calculated position information from the GPS receiving module and to display the position information with map information, and a storage unit configured to store map information including POI (Point of Interest) information. Further, the controller searches POIs in a category selected by a user when a POI mode is selected, and displays image icons representing searched POIs on corresponding positions of the map.

Also, the controller may display the image icons against equidistant curves in the POI mode, and each of the image icons may be a brand emblem included in the POI information. Further, the controller may display detailed information of a POI corresponding to a selected image icon, which is included in the POI information, on a detailed POI information window, if an image icon is selected by a user.

US 2004/0243307 A1 discloses a personal GPS navigation device capable of simultaneously displaying a map, an indication of the current position of the device on the map and a GPS signal strength indicator. The GPS navigation device is further capable of displaying icons indicating POIs, whose display may be prioritized by type or by density of occurrence.

EP 1 046 882 A2 discloses an electronic map apparatus where an electronic map is displayed in accordance with map data read out from a DVD-ROM. Then, distance display circles which have a common center located at a point on the electronic map and each interconnect points on the electronic map at equal geographical distances from the point are drawn. As a result, it is possible to know an approximate geographical distance to a destination intuitively and easily in the electronic map apparatus.

WO 2006/020088 A1 discloses a method to identify particular geographic locations by means other than the postal address for use in navigation system and navigation, routing and mapping programs. The method may be the assignment of a series of numbers, symbols or characters, or a combination thereof, to a particular entity, location or address within a defined parameter. Further, a system for generating routing information is provided that has the ability to receive a location code and provide routing information associated with the location code.

Moreover, the detailed information of a POI may include at least one of an image icon representing the POI, a business entity name of the POI, information of a business entity of the POI, a direction from the POI, a phone number of the POI and a web-site address of the POI. In addition, POIs may be categorized into at least one category by a user using a category menu.

Further, in the apparatus, a destination setting menu may be displayed on the detailed POI information window. The controller then generates a path to the POI, which is currently displayed on the detailed POI information window as a destination, if the destination setting menu is selected by a user. Also, an intermediate point setting menu may be displayed on the detailed POI information window. The controller then displays a path through the POI, which is currently displayed on the detailed POI information window as an intermediate point, if the intermediate point setting menu is selected by a user.

The apparatus may also include a wireless communication module configured to connect to the Internet. The controller can then connect a call to a POI, which is currently displayed on the detailed POI information window, through the wireless communication module, if a phone number of the POI displayed on the detailed POI information window is selected by a user. Similarly, the controller can connect to a web-site of a POI, which is currently displayed on the detailed POI information window, through the wireless communication module, if a web-site address of the POI displayed on the detailed POI information window is selected by a user.

In another aspect, the present invention provides a method of providing map information and which includes (A) detecting an execution command of a POI mode, (B) displaying a category menu including a plurality of categories, (C) searching POIs included in a category selected in the category menu by a user, and (D) displaying each of image icons corresponding to the searched POIs on a corresponding position of a map against equidistant curves. Also, each of the image icons may be a brand emblem included in the POI information.

Further, each of the image icons may be displayed as a different type according to whether or not a current time is in business hours. The positions of the POIs and information of the POIs may also be determined, modified and deleted by a user. In addition, the positions of the POIs and information of the POIs may be stored with the map. Also, one of the categories may be selected as a touch input is applied on the category menu.

The POIs may also be categorized according to business types of business entities of the POIs and setting types of the POI information. In addition, a magnification of display in the step (D) may be determined according to a magnification of display before executing the POI mode. Alternatively, a magnification of display in the step (D) may be determined to permit at least one of the POIs included in the selected category to be displayed. Also, a magnification of display in the step (D) may be determined as a maximum magnification in which all POIs in the selected category can be displayed at once within a lower limit.

In addition, a magnification and a position of display in the step (D) may be determined to permit POIs on a moving direction of the apparatus to be preferentially displayed, in consideration of a moving direction of the apparatus. The method may also include (E) detecting a user input applied on an image icon of one of POIs, and (F) displaying detailed information of the POI corresponding to the touched image icon.

The detailed information of a POI may include at least one of an image icon representing the POI, a business entity name of the POI, information of a business entity of the POI, a direction from the POI, a phone number of the POI and a web-site address of the POI. The method may also include (G) detecting a user input applied on a destination setting menu of a detailed POI information window, and (H) generating a path to the POI which is currently displayed on the detailed POI information window as a destination.

In addition, the method may include (I) detecting a user input applied on an intermediate point setting menu of a detailed POI information window, and (J) generating a path through the POI which is currently displayed on the detailed POI information window as an intermediate point. The method may also include (K) detecting a user input applied on a phone number of the POI displayed on a detailed POI information window, and (L) connecting a call to the POI which is currently displayed on the detailed POI information window. The method can also connect to the web-site of the POI which is currently displayed on the detailed POI information window.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

FIGS. 1A and 1B are overviews showing POI information displayed on a related art navigation apparatus;

FIG. 2 is a block diagram showing a navigation apparatus according to an embodiment of the present invention;

FIG. 3 is a flowchart illustrating a method of providing POI information in a navigation apparatus according to an embodiment of the present invention; and

FIGS. 4A to 4E are overviews of display screens on a navigation apparatus according to an embodiment of the present invention.

### DETAILED DESCRIPTION OF THE INVENTION

Reference will now be made in detail to the preferred embodiments of the present invention, examples of which are illustrated in the accompanying drawings.

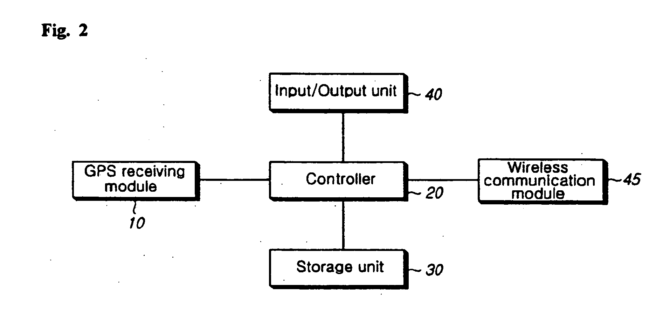

FIG. 2 is a block diagram showing a navigation apparatus according to an embodiment of the present invention. As shown in FIG. 2, the navigation apparatus includes a Global Positioning System (GPS) receiving module 10 for receiving navigation satellite signals (hereinafter, referred to as GPS signals) and calculating a position of the navigation apparatus based on the GPS signals.

Further, the GPS receiving module 10 receives the GPS signals at regular intervals and updates position information. The GPS receiving module 10 also includes, for example, an antenna for receiving signals, a memory, a GPS chip, a GRF chip, filters, a control chip, and the like. The navigation apparatus also includes a controller 20 for receiving and processing the position information calculated by the GPS receiving module 10 and for controlling the overall operations of the navigation apparatus.

The controller 20 also reads information on POIs stored in a storage unit 30, configures a display screen according to a particular POI mode, and displays the appropriate POI information. In addition, the screen configuration includes background distance indication images, current position markers marking the current position of the navigation apparatus (e.g., displayed at the center of the screen), a particular path, image marks showing the different POIs on the path, etc.

In addition, the storage unit 30 is connected to the controller 20 and stores map information such that the controller 20 can display a map on the navigation apparatus that includes position information calculated by the GPS module 10. The map information also includes POI information, which can be provided by a map data service company, together with the map information. A user may also input or download and store the POI information. The POI information provided by the map data service company can also be edited or deleted by the user.

As shown in FIG. 2, the navigation apparatus also includes an input/output unit 40 for receiving a command from a user and for informing the user of a search result, for example. In addition, in one embodiment, the input/output unit 40 can be configured as a display including a touch screen such that the user can input information into the navigation apparatus in a touching manner (e.g., single touch operation, double touch operation, drag and drop touch operation, flicking touch operation, etc.)

The navigation apparatus also includes a wireless communication module 45 for wirelessly connecting to the Internet, for example. The wireless communication module 45 can also function as a part for an Internet phone connection or web-site connection to a corresponding POI business, and a variety of wireless communication modules can be applied depending on a communication scheme such as a wireless LAN, Wi-bro, HSDPA module, and the like.

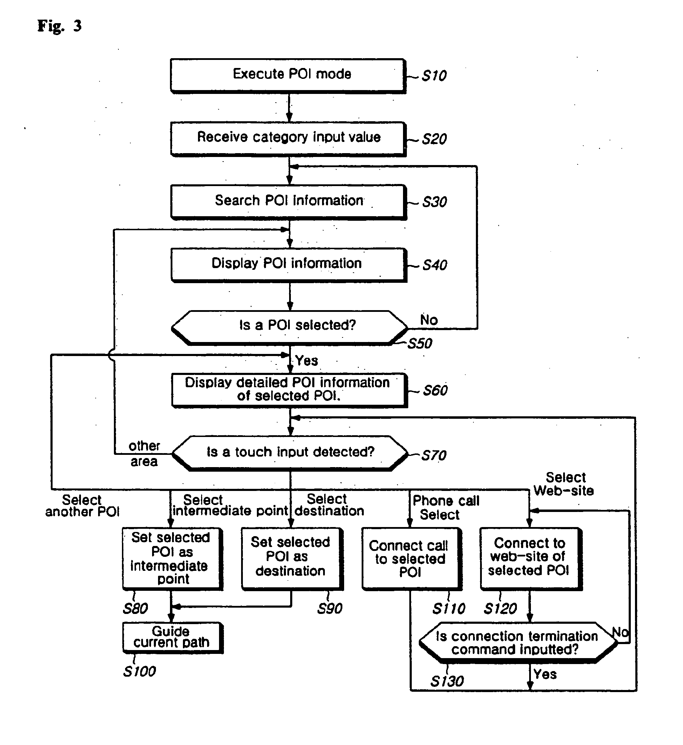

Next, FIG. 3 is a flowchart illustrating a method for providing POI information in a navigation apparatus according to an embodiment of the present invention. FIG. 2 will also be referred to in the following description. As shown in FIG. 3, the method includes inputting an execution command of the POI mode (step S10). Then, the controller 20 displays a category menu such that the user can set or select a particular category or categories (step S20). In one embodiment, the displayed category menu includes different types of businesses. The user can also separately classify or arrange the displayed POI information in the category menu.

The method then searches for POI information belonging to a category selected by the user, and displays image icons at appropriate positions on the map for the retrieved POI information matching the user's search (steps S30 and S40). The controller 20 then determines if one of the displayed POI image icons is selected (step S50). For example, the user can touch one of the displayed POI image icons to select the corresponding business, etc. of the POI image icon.

If the controller 20 determines the user has touched a displayed POI image icon (Yes in step S50), the controller 20 displays detailed POI information about the POI corresponding to the selected POI image icon (step S60). In addition, the detailed POI information includes information such as an enlarged POI image icon, a name of the POI store or business, information about the POI store or business, a distance of a POI path, a contact point and address of the store or business, and the like. The contact point also includes, for example, a phone number and web site-address of the corresponding POI store or business.

After the detailed POI information is displayed, the controller 20 determines whether the user has performed a touch input operation on the display of the navigation apparatus (step S70). In more detail, the controller 20 determines which touch input operation among a plurality of touch input operations the user has performed. For example, the user can 1) touch another POI image icon, 2) touch an intermediate point setting menu, 3) touch a destination setting menu, 4) touch a phone number of a corresponding store or business, 5) touch a web-site address of a corresponding store business, and 6) touch another area of the display.

If the controller 20 determines the user touches another POI image icon, the method returns to step S60 and the controller 20 displays a detailed POI menu display window for displaying detailed POI information on the other touched POI image icon. If the controller 20 determines the user touches an intermediate point setting menu, the controller 20 adds the touched POI to the current set path as an intermediate point, and then resets the path (step S80).

If the controller 20 determines the user touches a destination setting menu, the controller 20 sets or resets a path to have the touched POI as a destination (step S90). If the controller 20 determines the user touches a phone number of a corresponding store or store, the controller 20 connects a call to the corresponding store or business using the wireless communication module 45 (step S110). Therefore, the user can communicate with the corresponding store or business through the navigation apparatus.

In addition, in one embodiment, the controller 20 does not change the screen of the display, such that the user can simultaneously communicate with the store and operate the apparatus. For example, the user can touch a destination setting menu to change a destination setting while communicating with the store or business. Also, if the controller 20 determines the user has touched a web site address of a corresponding store or business, the controller 20 connects to the web-site of the corresponding store or business using the wireless communication module 45 (step S120). Thus, when the web-site of the corresponding store is displayed, the user can obtain or read desired information from the web-site.

Then, if the users inputs a connection termination command (Yes in step S130), the controller 20 terminates the connection to the corresponding web-site, and the process returns to step S70 and waits for the user to input of a new command. In addition, if the user touches an area other than the areas described above, the controller 20 closes the displayed detailed POI information display window 90, and the process returns to step S40 of displaying the searched POI. Also, after the user inputs or sets the information in steps 80 and 90, the controller 20 provides the appropriate path including the POI (step S100).

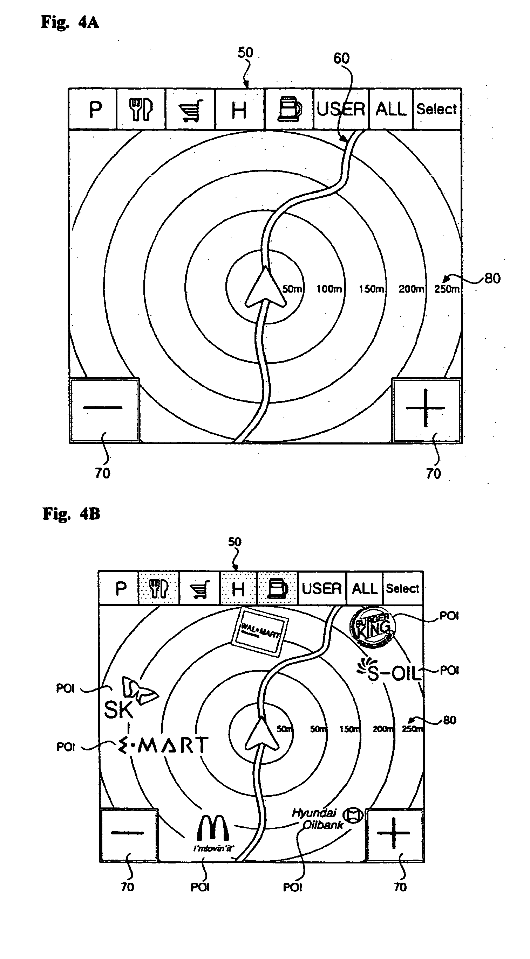

Next, FIGS. 4A-4E are overviews illustrating display screens for providing POI information according to an embodiment of the present invention. In more detail, FIG. 4A is an overview of a display screen illustrating a state in which the POI mode has just been entered. As shown in FIG. 4A, when the navigation apparatus enters the POI mode, the controller 20 displays a category menu 50 including a plurality of POI categories a user may select such as Parking locations (a symbol "P" of a parking sign), restaurants (a symbol of a fork and knife), shopping places (a symbol of a shopping cart), hotels (a symbol "H"), gas stations (a symbol of a gas pump), etc. Thus, the categories in this embodiment are categorized according to the business type of corresponding POI. The category menu 50 also includes a "USER" category in which only POIs selected by a user are displayed, and an "ALL" category in which every POI is displayed.

In addition, as shown in FIG. 4A, the controller 20 also displays equidistant curves 80 on the screen of the navigation apparatus such that the user can easily understand distances from the navigation apparatus to each POI. The controller 20 also preferably displays numerical values of distances from the position of the navigation apparatus with respect to the equidistant curves 80. The controller 20 can also display other types of images besides the equidistant curves 80 to indicate distances to the POIs and the distances between POIs.

In addition, the controller 20 also preferably displays a guide or path 60 displaying a path to a desired location. Further, the controller 20 also displays a magnification adjusting menu 70 that the user can manipulate (e.g., touch) to adjust a magnification of display. That is, if the user touches the "+" icon in FIG. 4A, the controller 20 enlarges or zooms in on the displayed map. Similarly, if the user touches the "-" icon in FIG. 4A, the controller 20 reduces or zooms out on the displayed map.

Next, FIG. 4B is an overview of a display screen displaying POIs belonging to a category selected by a user. In more detail, and as shown in FIG. 4B, the user has selected multiple categories including restaurants, hotels and gas stations (the particular image icons in the category menu 50 have been highlighted or shaded to indicate to the user they have been selected). Thus, in this example, the controller 20 displays all POIs corresponding to the selected categories in locations with respect to the equidistant curves 80.

Therefore, when the user looks at the map in FIG. 4B, he or she can quickly and easily see where different POIs are with respect to their current location. In addition, the user can easily determine the distances between the POIs and distances between the user and a corresponding POI because of the advantageously displayed equidistant curves 80 together with the POIs corresponding to the user-selected categories. The user can also remove particular POIs by deselecting (or selecting again) a particular category in the category menu 50. The controller 20 can also un-highlight the deselected category in this instance to indicate to the user that the category is no longer selected.

In addition, in the embodiment shown in FIG. 4B, the controller 20 displays image icons of the POIs that represent brand emblems used in advertising, for example. Thus, the user can easily recognize what type of business entity a corresponding POI is. Further, the magnification of display may be adjusted in various ways. For example, the controller 20 can maintain a magnification of display that was used before entering the POI mode. Alternatively, the controller 20 can adjust a magnification of display according to a number of searched POIs. For example, the controller 20 can adjust a magnification of display such that at least one searched POI belonging to a selected POI category is displayed on the screen of the navigation apparatus.

In addition, when a POI is positioned too far from the current position of the navigation apparatus, the magnification of display may be too low. Therefore, the controller 20 can use a particular lower limit for the magnification. The lower limit value may be either a predetermined constant value or a variable value, such as a value of M magnifications of a magnification of display of before entering the POI mode. Also, the controller 20 can also determine or set the magnification of display such that at least a predetermined number (N) of POIs can be displayed on the screen at once.

In addition, the magnification and position of display may be determined to permit POIs on a moving direction of the apparatus to be preferentially displayed, since users are usually more interested in the direction they are traveling. Thus, the position of display may be determined to permit the point corresponding to the current position of the navigation apparatus to move downward, so that a display rate of the area in the direction where the navigation apparatus moves.

Further, the controller 20 can also display the POI image icons in consideration of business hours of the entities corresponding to the POI image icons. That is, the controller 20 can distinctively display each of the image icons according to whether the current time is within business hours for a corresponding POI. For example, In FIG. 4B, the controller 20 distinctively displays image icons corresponding to closed businesses that are not currently open or in business by darkening the corresponding image icons. That is, the image icons for the businesses "Burger King", "Wal-mart" and "E-mart" are darkened. Accordingly, a user can easily recognize whether or not the stores are opened. In addition, the controller 20 can determine whether an entity corresponding to a POI is currently conducting business using business hours information included in the POI information or transmitted from web-sites of the stores through the wireless communication module 45.

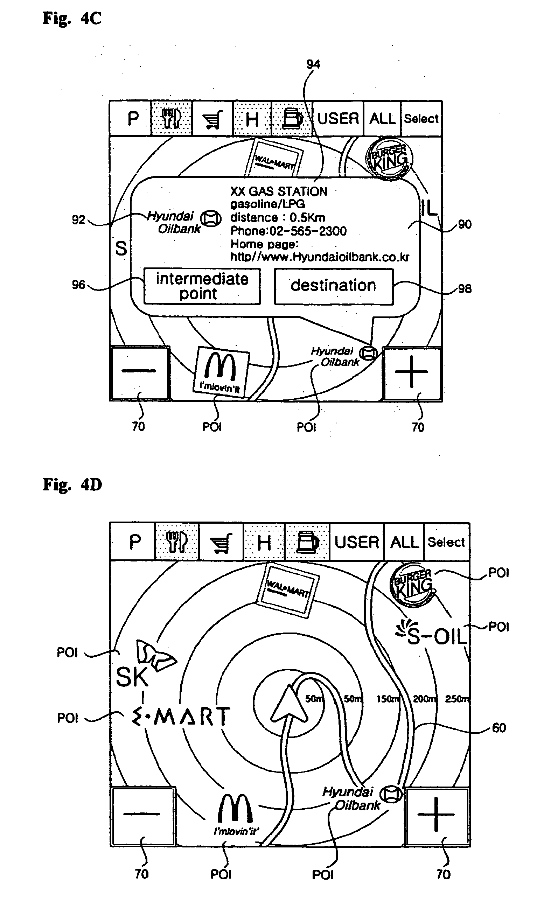

Next, FIG. 4C is an overview of a display screen including detailed POI information corresponding to a POI selected by a user. In more detail, as shown in FIG. 4C, when the user selects (e.g., touches) one of the image icons corresponding to the POIs, the controller 20 displays a detailed POI information window 90 including detailed information on the selected POI. In the example shown in FIG. 4C, the detailed information includes an enlarged image icon 92 corresponding to the image icon selected for the desired POI, an address and name information 94 (including website, phone number, etc.) of the selected POI, an intermediate point setting menu 96 and a destination setting menu 98.

In FIG. 4C, the address and name information 94 of the selected POI is displayed near the image icon 92. Further, the displayed phone number and web-site address of the business entity corresponding to the selected POI can be used for calling the business entity or accessing their web-site. In addition, the intermediate point setting menu 96 allows the user to reset the current path to pass through the selected POI as an intermediate point. For example, as shown in FIG. 4D, the path 60 has been altered from the path 60 shown in FIG. 4B to include the selected Hyundai Oilbank POI. Similarly, the user can select the destination setting menu 98 to set a new path to arrive at the selected POI. Thus, with reference to FIG. 4D, when the user selects (e.g., touches the intermediate point setting menu 96), the controller 20 displays a new path including the selected POI as an intermediate point.

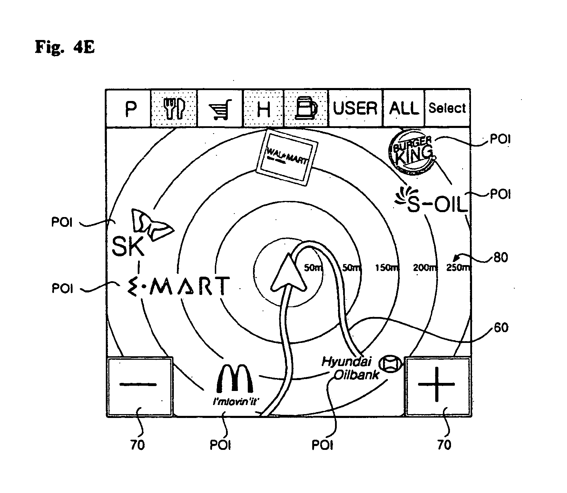

In addition, FIG. 4E is an overview of a display screen illustrating the controller 20 change the path 60 to include the selected POI as the destination, when the user selects the destination setting menu 98. Thus, the user can easily modify the current path or route to a particular destination to the selected POI. The user can also estimate or determine the distance between their current position and the destination by viewing the equidistance curves 80.

As described above, the embodiments of the present invention provide several advantages.

For example, because the current position of the navigation apparatus and POIs are displayed on a map which contains equidistant curves, the user can easily recognize driving paths and directions to different POIs. In addition, the user can easily select a desired category or categories of POIs by selecting one or more categories from a display category menu. Thus, the user can easily search for particular POIs.

The user can also view detailed information about particular POIs by simply touching a corresponding POI image icon. In addition, the user can easily change, set or reset a driving path to include a selected POI as an intermediate point or destination point by simply touching a corresponding menu option. Further, the user does not have to enter a separate path set navigation mode to set a particular POI as a destination or an intermediate point.

In addition, the input/output unit 40 in FIG. 2 can include a display for displaying the different navigation display screens according to an embodiment of the present invention. The display can also include a touch screen so the user can touch the display to select or input information into the navigation apparatus. The navigation apparatus can also be installed in a vehicle or may be included in a mobile terminal such as a cell phone, laptop, etc.

This invention may be conveniently implemented using a digital computer or microprocessor programmed according to the teachings of the present specification, as will be apparent to those skilled in the computer art. Appropriate software coding can readily be prepared by skilled programmers based on the teachings of the present disclosure, as will be apparent to those skilled in the software art. The invention may also be implemented by the preparation of application specific integrated circuits whereby interconnecting an appropriate network of conventional computer circuits, as will be readily apparent to those skilled in the art.

Any portion of the present invention implemented on a general purpose digital computer or microprocessor includes a computer program product which is a storage medium including instructions which can be used to program a computer to perform a process of the invention. The storage medium can include, but is not limited to, any type of disk including floppy disk, optical disk, CD-ROMs, and magneto-optical disks, ROMs, RAMs, EPROMs, EEPROMs, magnetic or optical cards, or any type of media suitable for storing electronic instructions.

As the present invention may be embodied in several forms without departing from the essential characteristics thereof as defined in the appended claims, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims are therefore intended to be embraced by the appended claims.

## Claims

1. An apparatus for providing map information, the apparatus comprising:
a Global Positioning System, hereinafter referred to as GPS, receiving module (10) configured to calculate positional information with respect to the apparatus;
a display configured to display map information and the calculated positional information; and
a controller (20) configured
to search for Points of Interests, hereinafter referred to as POIs, from a selected POI category,
to control the display to display image icons representing POIs that were found during the search on corresponding positions within the displayed map information, and
to display a path (60) indicating directions from a source to a destination with the map information,
**characterized in that** the controller (20) is further configured to:
to control the display to display equidistant curves (80) on the map information and to display the image icons with respect to the equidistance curves (80) based on the positional information; and
to change the displayed path (60) to include a selected displayed POI as an intermediate point when the selected displayed POI is designated as the intermediate point.

2. The apparatus of claim 2, wherein the controller (20) is further configured to display numerical values indicating distances of the equidistance curves (80) with respect to a current position of the apparatus.

3. The apparatus of claim 1, wherein the controller (20) is further configured to control the display to display a category menu including a plurality of categories that can be selected to display the image icons representing POIs that were found during the search when one or more of the categories are selected.

4. The apparatus of claim 1, wherein the controller (20) is further configured to distinctively display image icons corresponding to POI entities that are currently open versus image icons corresponding to POI entities that are not currently open.

5. The apparatus of claim 1, wherein the controller (20) is further configured to control the display to display detailed information about a selected POI including at least one of an image icon representing the selected POI, a business entity name of the selected POI, a phone number of the selected POI and a web-site address of the selected POI.

6. The apparatus of claim 5, further comprising:
a wireless communication module (45),
wherein the controller (20) is further configured to connect a call to the selected POI or to connect to the web-site address of the selected POI through the wireless communication module (45), if the phone number or the web-site address of the POI is selected, respectively.

7. The apparatus of claim 1, wherein the controller (20) is further configured to adjust a magnification of the display based on at least one of 1) a user input operation, 2) such that at least one POI found in the search is displayed, and 3) such that a predetermined number of POIs found in the search are displayed.

8. A method of providing map information, the method comprising:
calculating positional information with respect to an apparatus providing the map information;
displaying the map information and the calculated positional information;
searching (S30) for Points of Interests, hereinafter referred to as POIs, from a selected POI category;
displaying (S40) image icons representing POIs that were found during the search on corresponding positions within the displayed map information; and
displaying a path (60) indicating directions from a source to a destination with the map information;
**characterized in that** the method further comprises:
displaying equidistant curves (80) on the map information, wherein the step of displaying (S40) the image icons displays the image icons with respect to the equidistance curves (80) based on the positional information; and
changing (S100) the displayed path (60) to include a selected displayed POI as an intermediate point when the selected displayed POI is designated as the intermediate point.

9. The method of claim 8, further comprising:
displaying numerical values indicating distances of the equidistance curves (80) with respect to a current position of the apparatus.

10. The method of claim 8, further comprising:
displaying a category menu including a plurality of categories that can be selected to display (S40) the image icons representing POIs that were found during the search when one or more of the categories are selected.

11. The method of claim 8, further comprising:
displaying detailed information about a selected POI including at least one of an image icon representing the selected POI, a business entity name of the selected POI, a phone number of the selected POI and a web-site address of the selected POI.

## Patentansprüche

1. Vorrichtung zum Bereitstellen von Karteninformationen, wobei die Vorrichtung umfasst:
ein Modul (10) zum Empfangen des globalen Positionierungssystems, das im Folgenden mit GPS bezeichnet wird, das konfiguriert ist, um räumliche Informationen in Bezug auf die Vorrichtung zu berechnen;
eine Anzeige, die konfiguriert ist, um Karteninformationen und die berechneten räumlichen Informationen anzuzeigen; und
eine Steuereinheit (20), die konfiguriert ist, um
interessante Punkte, die im Folgenden mit POIs bezeichnet werden, aus einer ausgewählten POI-Kategorie zu suchen,
die Anzeige zu steuern, um Bild-Icons anzuzeigen, die POIs repräsentieren, die während der Suche an entsprechenden Positionen in den angezeigten Karteninformationen gefunden wurden, und
einen Weg (60) anzuzeigen, der Richtungen von einer Quelle zu einem Ziel mit den Karteninformationen angibt,
**dadurch gekennzeichnet, dass** die Steuereinheit (20) ferner konfiguriert ist, um:
die Anzeige zu steuern, um äquidistante Kurven (80) in den Karteninformationen anzuzeigen und um die Bild-Icons in Bezug auf die äquidistanten Kurven (80) anhand der räumlichen Informationen anzuzeigen; und
den angezeigten Weg (60) zu ändern, damit er einen ausgewählten angezeigten POI als einen Zwischenpunkt enthält, wenn der ausgewählte angezeigte POI als der Zwischenpunkt bezeichnet wird.

2. Vorrichtung nach Anspruch 2, wobei die Steuereinheit (20) ferner konfiguriert ist, um numerische Werte anzuzeigen, die Abstände zu äquidistanten Kurven (80) in Bezug auf eine momentane Position der Vorrichtung angeben.

3. Vorrichtung nach Anspruch 1, wobei die Steuereinheit (20) ferner konfiguriert ist, um die Anzeige zu steuern, um ein Kategorie-Menü anzuzeigen, das mehrere Kategorien enthält, die ausgewählt werden können, um die Bild-Icons anzuzeigen, die POIs repräsentieren, die während der Suche gefunden wurden, wenn eine oder mehrere der Kategorien ausgewählt sind.

4. Vorrichtung nach Anspruch 1, wobei die Steuereinheit (20) ferner konfiguriert ist, um Bild-Icons, die POI-Entitäten entsprechen, die momentan geöffnet sind, in Bezug auf Bild-Icons, die POI-Entitäten entsprechen, die momentan nicht geöffnet sind, unterschiedlich anzuzeigen.

5. Vorrichtung nach Anspruch 1, wobei die Steuereinheit (20) ferner konfiguriert ist, um die Anzeige zu steuern, um detaillierte Informationen über einen ausgewählten POI anzuzeigen, die wenigstens ein Bild-Icon, das den ausgewählten POI repräsentiert, und/oder einen Geschäftsentität-Namen des ausgewählten POI und/oder eine Telephonnummer des ausgewählten POI und/oder eine Website-Adresse des ausgewählten POI enthalten.

6. Vorrichtung nach Anspruch 5, die ferner umfasst:
ein Modul (45) für drahtlose Kommunikation,
wobei die Steuereinheit (20) ferner konfiguriert ist, um über das Modul (45) für drahtlose Kommunikation einen Anruf zu dem ausgewählten POI zu verbinden oder mit der Website-Adresse des ausgewählten POI zu verbinden, falls die Telephonnummer bzw. die Website-Adresse des POI gewählt wird.

7. Vorrichtung nach Anspruch 1, wobei die Steuereinheit (20) ferner konfiguriert ist, um eine Vergrößerung der Anzeige anhand 1) einer Anwendereingabebedienung und/oder 2) derart, dass wenigstens ein POI, der in der Suche gefunden wurde, angezeigt wird, und/oder 3) derart, dass eine vorgegebene Anzahl von POIs, die in der Suche gefunden wurden, angezeigt werden, einzustellen.

8. Verfahren zum Bereitstellen von Karteninformationen, wobei das Verfahren umfasst:
Berechnen räumlicher Informationen in Bezug auf eine Vorrichtung, die die Karteninformationen bereitstellt;
Anzeigen der Karteninformationen und der berechneten räumlichen Informationen;
Suchen (S30) nach interessierenden Punkten, die im Folgenden mit POIs bezeichnet werden, aus einer ausgewählten POI-Kategorie;
Anzeigen (S40) von Bild-Icons, die POIs repräsentieren, die während der Suche gefunden wurden, an entsprechenden Positionen in den angezeigten Karteninformationen; und
Anzeigen eines Wegs (60), der Richtungen von einer Quelle zu einem Ziel angibt, mit den Karteninformationen;
**dadurch gekennzeichnet, dass** das Verfahren ferner umfasst:
Anzeigen äquidistanter Kurven (80) auf den Karteninformationen, wobei der Schritt des Anzeigens (S40) der Bild-Icons die Bild-Icons in Bezug auf die äquidistanten Kurven (80) anhand der räumlichen Informationen anzeigt; und
Ändern (S100) des angezeigten Wegs (60), damit er einen ausgewählten angezeigten POI als einen Zwischenpunkt enthält, wenn der ausgewählte angezeigte POI als der Zwischenpunkt bezeichnet wird.

9. Verfahren nach Anspruch 8, das ferner umfasst:
Anzeigen numerischer Werte, die Abstände der äquidistanten Kurven (80) in Bezug auf eine momentane Position der Vorrichtung angeben.

10. Verfahren nach Anspruch 8, das ferner umfasst:
Anzeigen eines Kategorie-Menüs, das mehrere Kategorien enthält, die ausgewählt werden können, um die Bild-Icons anzuzeigen (S40), die POIs repräsentieren, die während der Suche gefunden wurden, wenn eine oder mehrere der Kategorien ausgewählt sind.

11. Verfahren nach Anspruch 8, das ferner umfasst:
Anzeigen genauer Informationen über einen ausgewählten POI, die ein Bild-Icon, das den ausgewählten POI repräsentiert, und/oder einen Geschäftsentität-Namen des ausgewählten POI und/oder eine Telephonnummer des ausgewählten POI und/oder eine Website-Adresse des ausgewählten POI enthalten.

## Revendications

1. Appareil pour fournir des informations de cartographie, l'appareil comprenant :
un module récepteur (10) d'un système de positionnement global,
désigné par GPS dans ce qui suit, configuré pour calculer des informations de position par rapport à l'appareil ;
un affichage configuré pour afficher des informations de cartographie et les informations de position calculées ; et
un contrôleur (20) configuré
pour rechercher des points d'intérêts, désignés par POIs dans ce qui suit, depuis une catégorie de POI sélectionnée,
pour commander l'affichage afin d'afficher des icônes représentant des POIs qui ont été trouvés pendant la recherche sur des positions correspondantes dans les informations de cartographie affichées, et pour afficher un trajet (60) indiquant des directions depuis une source vers une destination avec les informations de cartographie,
**caractérisé en ce que** le contrôleur (20) est en outre configuré
pour commander l'affichage afin d'afficher des courbes d'équidistance (80) sur les informations de cartographie et pour afficher les icônes par rapport aux courbes d'équidistance (80) en se basant sur les informations de position ; et
pour changer le trajet affiché (60) afin d'inclure un POI affiché sélectionné à titre de point intermédiaire quand le POI affiché sélectionné est désigné comme étant le point intermédiaire.

2. Appareil selon la revendication 1, dans lequel le contrôleur (20) est en outre configuré pour afficher des valeurs numériques indiquant des distances des courbes d'équidistance (80) par rapport à une position actuelle de l'appareil.

3. Appareil selon la revendication 1, dans lequel le contrôleur (20) est en outre configuré pour commander l'affichage afin d'afficher un menu de catégorie incluant une pluralité de catégories qui peuvent être sélectionnées pour afficher les icônes représentant des POIs qui ont été trouvés pendant la recherche quand une ou plusieurs des catégories sont sélectionnées.

4. Appareil selon la revendication 1, dans lequel le contrôleur (20) est en outre configuré pour afficher de manière distincte des icônes correspondant à des entités de POI qui sont actuellement ouvertes vis-à-vis d'icônes correspondant à des entités de POI qui ne sont pas actuellement ouvertes.

5. Appareil selon la revendication 1, dans lequel le contrôleur (20) est en outre configuré pour commander l'affichage afin d'afficher des informations détaillées concernant un POI sélectionné incluant au moins un élément parmi une icône représentant le POI sélectionné, un nom d'entreprise du POI sélectionné, un numéro de téléphone du POI sélectionné, et une adresse du site Web du POI sélectionné.

6. Appareil selon la revendication 5, comprenant en outre :
un module de communication sans fil (45),
dans lequel le contrôleur (20) est en outre configuré pour établir un appel vers le POI sélectionné ou pour établir une connexion à l'adresse du site Web du POI sélectionné via le module de communication sans fil (45), si le numéro de téléphone ou l'adresse du site Web du POI est sélectionné(e), respectivement.

7. Appareil selon la revendication 1, dans lequel le contrôleur (20) est en outre configuré pour ajuster un agrandissement de l'affichage en se basant sur au moins un paramètre suivant
1) une opération de saisie de la part d'un utilisateur,
2) tel qu'au moins un POI trouvé dans la recherche est affiché, et
3) tel qu'un nombre prédéterminé de POIs trouvés dans la recherche sont affichés.

8. Procédé pour fournir des informations de cartographie, le procédé comprenant les étapes consistant à :
calculer des informations de position par rapport à un appareil fournissant les informations de cartographie ;
afficher les informations de cartographie et les informations de position calculées ;
rechercher (S30) des points d'intérêt, désignés par POIs dans ce qui suit, depuis une catégorie de POI sélectionnée ;
afficher (S40) des icônes représentant des POIs qui ont été trouvés pendant la recherche sur des positions correspondantes dans les informations de cartographie affichées ; et
afficher un trajet (60) indiquant des directions depuis une source vers
une destination avec les informations de cartographie ;
**caractérisé en ce que** le procédé comprend en outre les étapes consistant à :
afficher des courbes d'équidistance (80) sur les informations de cartographie, telles que l'étape d'affichage (S40) des icônes affiche les icônes par rapport aux courbes d'équidistance (80) en se basant sur les informations de position ; et
changer (S100) le trajet affiché (60) pour inclure un POI affiché sélectionné à titre de point intermédiaire quand le POI affiché sélectionné est désigné comme étant le point intermédiaire.

9. Procédé selon la revendication 8, comprenant en outre :
l'affichage de valeurs numériques indiquant des distances des courbes d'équidistance (80) par rapport à une position actuelle de l'appareil.

10. Procédé selon la revendication 8, comprenant en outre :
l'affichage d'un menu de catégorie incluant une pluralité de catégories qui peuvent être sélectionnées pour afficher (S40) les icônes représentant des POIs qui ont été trouvés pendant la recherche quand une ou plusieurs des catégories sont sélectionnées.

11. Procédé selon la revendication 8, comprenant en outre :
l'affichage d'informations détaillées concernant un POI sélectionné incluant au moins un paramètre parmi une icône représentant le POI sélectionné, un nom d'entreprise du POI sélectionné, un numéro de téléphone du POI sélectionné, et une adresse du site Web du POI sélectionné.
